# EUROPÄISCHE PATENTSCHRIFT

(11) **EP 0 694 696 B1**
(45) Veröffentlichungstag und Bekanntmachung des Hinweises auf die Patenterteilung: **15.09.1999**
(21) Anmeldenummer: 94810440.1
(22) Anmeldetag: 25.07.1994
(51) Int. Cl.: F04D 29/04, F16C 39/06

(54) **Kreiselpumpe mit einer Abhebevorrichtung**
Centrifugal pump with a lifting device
Pompe centrifuge avec un dispositif de levage

(43) Veröffentlichungstag der Anmeldung: 31.01.1996
(73) Patentinhaber: SULZER PUMPEN AG, CH-8401 Winterthur (CH)
(72) Erfinder: Liegat, Siegfried, D-76646 Bruchsal (DE)
(74) Vertreter: Trieblnig, Adolf

(56) Entgegenhaltungen:
- EP-A- 0 523 002
- DE-A- 3 802 950
- FR-A- 2 367 939
- GB-A- 2 066 380
- US-A- 3 614 181
- SOVIET INVENTIONS ILLUSTRATED Section PQ, Week 8642, 30. Oktober 1986 Derwent Publications Ltd., London, GB; Class Q56, AN 86-277273 & SU-A-1 213 256 (GUSKO) 23. März 1986
- IEEE TRANSACTIONS ON MAGNETICS, Bd.MAG-17, Nr.1, Januar 1981 Seiten 1169 - 1173 JEAN-PAUL YONNET 'permanent magnet bearings and couplings'

## Beschreibung

Die Erfindung betrifft eine Kreiselpumpe mit einer Abhebevorrichtung zur Erzeugung eines Axialschubes auf eine Rotorwelle der Kreiselpumpe gemäss dem Oberbegriff von Anspruch 1.

Aus der EP-0 355 796 A2 ist eine Kreiselpumpe mit einer Entlastungsvorrichtung und einem elektromagnetischen Lager bekannt. Entlastungsvorrichtungen werden seit langer Zeit verwendet, um bei einer laufenden Kreiselpumpe den Axialschub auszugleichen. Eine typische Entlastungsvorrichtung einer Kreiselpumpe umfasst eine rotierende Entlastungsscheibe und eine feststehende Entlastungsgegenscheibe, die einen in radialer Richtung verlaufenden Spalt bilden, durch den ein Teil des in der Kreiselpumpe unter Druck stehenden Fluides gegen aussen abfliesst. Dadurch wird die Welle der Kreiselpumpe in axialer Richtung in einem Gleichgewichtszustand gehalten zwischen der durch den Axialschub bewirkten Kraft und der durch die Entlastungsvorrichtung bewirkten Gegenkraft. Beim Betrieb der Kreiselpumpe können Übergangsphasen auftreten, zum Beispiel beim Anlaufen oder Abstellen, während denen das Fluid einen geringen Druck aufweisen kann, sodass die Welle nicht in einem Gleichgewichtszustand gehalten werden kann. In einer solchen Übergangssituation besteht die Gefahr, dass die beiden Scheiben der Entlastungsvorrichtung sich gegenseitig berühren, was diese beschädigen könnte. Um derartige Schäden zu vermeiden schlägt die eingangs zitierte Patentschrift vor, während der Übergangsphase oder während dem Stillstand der Kreiselpumpe mittels eines angesteuerten Elektromagneten derart auf die axiale Lage der Welle zu wirken, dass sich die beiden Scheiben der Entlastungsvorrichtung nicht berühren.

Diese bekannte Vorrichtung weist den Nachteil auf, dass die axiale Lage der Welle mit einem Sensor zu erfassen ist und mit Hilfe ansteuerbarer Elektromagneten zu regeln ist. Die bekannte Vorrichtung weist den weiteren Nachteil auf, dass der maximal mögliche Verschiebungsweg in axialer Richtung sehr klein ist.

Die DE-B-38 02 950 beschreibt Zentrifugalpumpen mit einer Entlastungsvorrichtung, die mit der geförderten Flüssigkeit und mit dem Förderdruck durch die Differenzfläche von Laufradrückseite und einer Entlastungsscheibe einen Entlastungsspalt so regelt, dass sich die Axialschübe bei laufender Pumpe ausgleichen. Um beim Anfahren und Auslaufen der Pumpe einen Entlastungsspalt sicherzustellen, sind Magnetradiallager mit einem axialen Versatz an der Entlastungsscheibe angebracht, die im Stillstand den Entlastungsspalt vergrössern und einen Axialschub in Richtung eines Notlauf lagers erzeugen. Der durch den Entlastungsspalt begrenzte Anteil der Förderflüssigkeit fliesst durch das axial versetzte Magnet-Radiallager und stellt die Schmierung des dahinterliegenden Notlauflagers sicher. Gleichzeitig wird mit dem abgezweigten Anteil der Förderflüssigkeit aus dem noch weiter dahinterliegenden Stopfbüchsenbereich Wärme abgeführt. Diese Lösung hat den Nachteil, dass der Magnetspalt von der Förderflüssigkeit durchströmt wird. Die Magnete müssen gegen die Förderflüssigkeit unempfindlich sein, was die Anzahl der gepumpten Flüssigkeiten einschränkt, oder es müssen zusätzliche Verschleiss- und Korrosionsschutzschichten im Magnetspalt angebracht werden. Ein weiterer Nachteil besteht darin, dass bei Trockenlauf der Pumpe der Rotor in das Notlauf lager hineinverschoben wird.

Anordnungen von Permanentmagneten um Lagerkräfte an einem Rotor zu kompensieren, sind in der US-A-3,614,181 beschrieben. Gezeigt sind Rotoren mit sich abstossenden Radiallagern, die sich in einem labilen Gleichgewichtszustand bezüglich Axialverschiebungen befinden, bei dem sich gleichgepolte Magnete über einen Radialspalt getrennt genau gegenüberliegen müssen. Durch einen axialen Versatz von sich radial paarweise gegenüberliegenden Permanentmagneten ungleicher Polarität in zwei Axiallagern wird der Rotor zwischen den Axiallagern vorgespannt. Dabei heben sich die Axialkräfte der beiden Axiallager bei einer gleich grossen Ausgleichskraft gegenseitig auf und es entsteht bei axialer Auslenkung für jedes Axiallager nur eine kleine Rückstellkraft, die der Differenz zur vorherigen Ausgleichskraft entspricht. Für die Praxis von Kreiselpumpen, die Störgrössen in axialer Richtung am Rotor aufweisen, ist eine solche Anordnung völlig ungeeignet, da die Radiallager aus dem labilen Gleichgewicht heraus sehr schnell so grosse Axialkräfte erzeugen, dass die eigentlichen Axiallager überfordert sind und da Radiallagerkomponenten soweit axial zueinander verschoben werden, dass eine Havarie der Radiallager stattfindet. In der GB-A-2 066 380 werden ganz ähnlich die rotorseitigen Magnete mit einem Versatz gegenüber den Statormagneten zusammengefasst, um über die magnetische Koppelung einer stationären Zusatzmasse bei radialen Auslenkungen des Wellenendes eine Dämpfung zu erreichen.

Der vorliegenden Erfindung liegt die Aufgabe zugrunde, eine Kreiselpumpe nach dem Oberbegriff des Anspruchs 1 derart zu verbessern, dass bei Trockenlauf der Pumpe kein zusätzliches axiales Notlauflager beansprucht wird.

Diese Aufgabe wird erfindungsgemäss gelöst durch den Gegenstand mit den in Anspruch 1 definierten Merkmalen. Die Unteransprüche 2 bis 10 beziehen sich auf weitere, vorteilhafte Ausgestaltungen der Erfindung.

Die erfindungsgemässe Kreiselpumpe mit einer Abhebevorrichtung zur Erzeugung eines Axialschubes auf eine axial verschiebbare Rotorwelle der Kreiselpumpe besteht aus einem ersten, mit der Rotorwelle verbindbaren Körper, der ein Permanentmagnet beziehungsweise eine Permanentmagnetanordnung aufweist, sowie einen ortsfest angeordneten, zweiten Körper, der ebenfalls ein Permanentmagnet beziehungsweise eine Permanentmagnetanordnung aufweist, wobei die beiden Permanentmagnete beziehungsweise Permanentmagnetanordnungen derart gegenseitig zugeordnet sind, dass die bewirkten magnetischen Kräfte die Rotorwelle in einer Ruhelage halten, oder bei einer durch den Betrieb der Kreiselpumpe verursachten Verschiebung aus der Ruhelage derart auf die Rotorwelle wirken, dass sie eine zur Verschiebungsrichtung entgegengesetze Kraft erzeugen.

Die erfindungsgemässe Kreiselpumpe mit Permanentmagneten weist den Vorteil auf, dass auf eine aufwendige Regelung mit Sensoren, Stellgliedern und ansteuerbaren Elektromagneten verzichtet werden kann. Die erfindungsgemässe Kreiselpumpe ist sehr wartungsfreundlich und störungsunempfindlich. Ein weiterer Vorteil ist darin zu sehen, dass sich die Abhebevorrichtung auf einfache Weise an bereits bestehende Kreiselpumpen anfügen lässt.

In einer Ausführungsform sind die Permanentmagnete ringförmig ausgebildet, derart, dass die Permanentmagnete des ersten und zweiten Körpers in einer Ruhelage in radialer Richtung übereinanderliegen, und in radialer Richtung gleichgerichtet magnetisiert sind. Ein Vorteil dieser Ausführungsform ist darin zu sehen, dass sich der erste Körper in axialer Richtung bis zu einer Breite eines Permanentmagneten (Ringbreite) verschieben lässt.

In einer weiteren, vorteilhaften Ausführungsform sind mehrere ringförmige Permanetmagnete in axialer Richtung nebeneinander angeordnet, wobei nebeneinanderliegende Permanentmagnete entgegengesetzt magnetisiert sind. Ein Vorteil dieser Ausführungsform ist darin zu sehen, dass die maximale in axialer Richtung wirkende Kraft durch die Anzahl nebeneinanderliegender Permanentmagnete bestimmbar ist.

Die Abhebevorrichtung mit Permanentmagneten umfasst eine Vielzahl von konkreten Ausführungsformen. Grundsätzlich sind die Permanentmagnete bezüglich deren Magnetisierungsrichtung derart im ersten und zweiten Körper anzuordnen, dass deren gegenseitige Zuordnung bei einer axialen Verschiebung des ersten, mit der Rotorwelle verbindbaren oder verbundenen Körpers, eine zur Verschiebungsrichtung entgegengesetzte Kraft bewirkt. Dabei kann die Rotorwelle in horizontaler, vertikaler oder einer beliebigen anderen Richtung angeordnet sein.

Im folgenden wird die Erfindung anhand von Ausführungsbeispiele beschrieben. Es zeigen:
- Fig. 1: einen Längsschnitt durch eine Kreiselpumpe mit einer Vorrichtung zur Erzeugung eines Axialschubes;
- Fig. 2a: einen mit Permanentmagneten bestückten, rotierbaren Körper;
- Fig. 2b: einen mit Permanentmagneten bestückten, ortsfesten Körper mit rotierbaren Innenkörper;
- Fig. 2c,2d: weitere Ausführungsbeispiele von Ausgestaltunges der Permanentmagnete;
- Fig. 3a-3c: Ausführungsbeispiele zur Anordnung der Permanentmagnete und
- Fig. 4, 5: Ausführungsbeispiele für eine Vorrichtung zur Erzeugung eines Axialschubes.

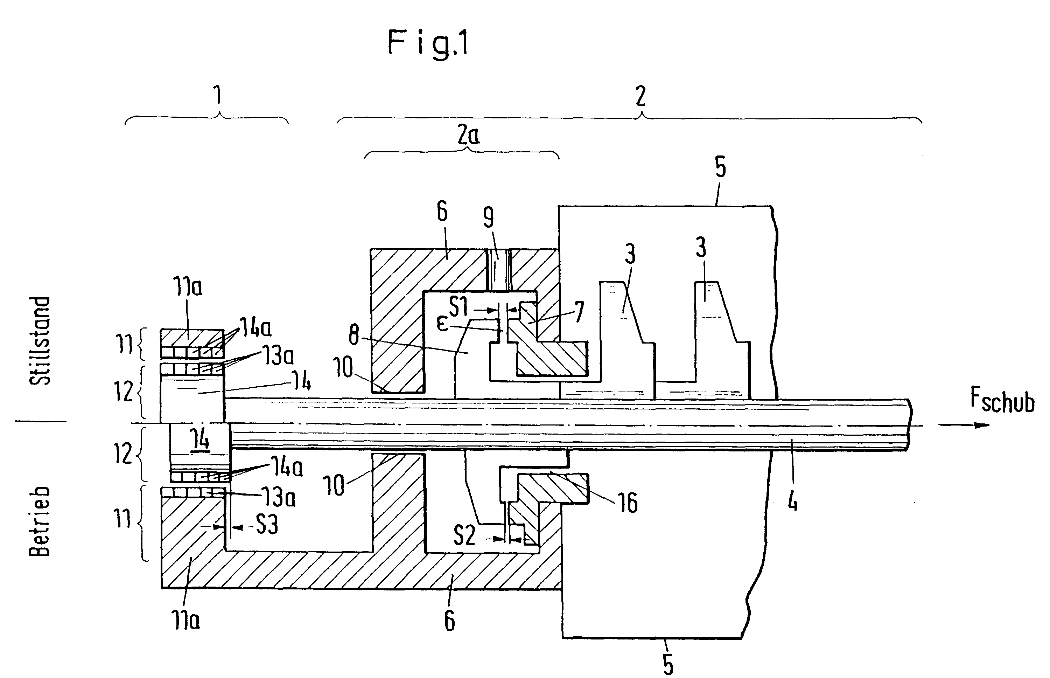

Fig. 1 zeigt eine mehrstufige Kreiselpumpe 2, die ein Pumpengehäuse 5, eine Rotorwelle 4 sowie zwei mit der Rotorwelle 4 verbundene Pumpenräder 3 umfasst. Am Pumpengehäuse 5 ist in axialer Richtung eine Entlastungsvorrichtung 2a mit einem Gehäuse 6 angeordnet, die eine rotierende, mit der Rotorwelle 4 verbundene Entlastungsscheibe 8 und eine feststehende, mit dem Gehäuse 6 verbundene Entlastungsgegenscheibe 7 umfasst. Fig. 1 zeigt die Stellung der Rotorwelle 4 in zwei unterschiedlichen Betriebszuständen. In der oberen Hälfte ist ein Stillstand dargestellt, während in der unteren Hälfte ein Betrieb der Kreiselpumpe dargestellt ist. Während dem Betrieb fördert die Kreiselpumpe ein Fluid, was auf die Rotorwelle 4 eine axiale Schubkraft F_{schub} bewirkt, die von der Entlastungsvorrichtung 2a kompensiert wird. Ein Teil des im Gehäuse 5 unter Druck stehenden Fluides fliesst über die Öffnung 16 durch den zwischen der Entlastungscheibe 8 und der Entlastungsgegenscheibe 7 gebildeten, radial verlaufenden Spalt ε und fliesst über die Abflussöffnung 9 ab. Dadurch wird eine die Schubkraft F_{schub} kompensierende Gegenkraft erzeugt. Die axiale Breite S2 des radial durchflossenen Spaltes ε ist unter anderem abhängig vom Druck des Fluides sowie der axialen Schubkraft F_{schub}.

Die Rotorwelle 4 ist mit einer magnetischen Abhebevorrichtung 1 verbunden, die auf die Rotorwelle 4 eine entgegengesetzt zur Schubkraft F_{schub} wirkende Kraft ausübt, um ein Berühren der Entlastungscheibe 8 mit der Entlastungsgegenscheibe 7 zu verhindern. In der dargestellten Ausführungsform weist die Abhebevorrichtung 1 einen beweglichen, zylinderförmigen Körper 12 mit einem Innenkörper 14 auf, dessen radiale Aussenfläche mit mehreren permanentmagnetischen Ringen 14a belegt ist. Die Abhebevorrichtung 1 weist weiter einen ortsfest angeordneten, mit dem Gehäuse 6 verbundenen Körper 11a auf, der eine zylinderförmige Ausnehmung aufweist, deren Innenfläche mit mehreren permanentmagnetischen Ringen 13a belegt ist. Die Permanentmagente 13a sind derart angeordnet, dass sie bei Stillstand der Kreiselpumpe die Rotorwelle 4 in einer Ruhelage halten, wie dies im oberen Teil der Fig. 1 dargestellt ist. Während dem Betrieb der Kreiselpumpe verschiebt sich die Rotorwelle 4 um einen Betrag S3 in Richtung der Schubkraft F_{schub}, wie dies im unteren Teil der Fig. 1 dargestellt ist, sodass sich die Breite des Spaltes von S1 auf die Distanz S2 verringert. Während dem Betrieb der Kreiselpumpe wird der grösste Teil der Schubkraft F_{schub} von der Entlastungsvorrichtung 2a kompensiert. Nur im Übergangsbetrieb, bei abnehmender Schubkraft F_{schub}, bewirkt die magnetische Abhebevorrichtung 1 eine Bewegung der Rotorwelle 4 in axialer Richtung. Die Ruhelage ist definiert als diejenige Lage, welche die Rotorwelle 4 einnimmt, wenn keine Schubkraft F_{schub} angreift. Die Ruhelage wird durch die Abhebevorrichtung 1 bestimmt.

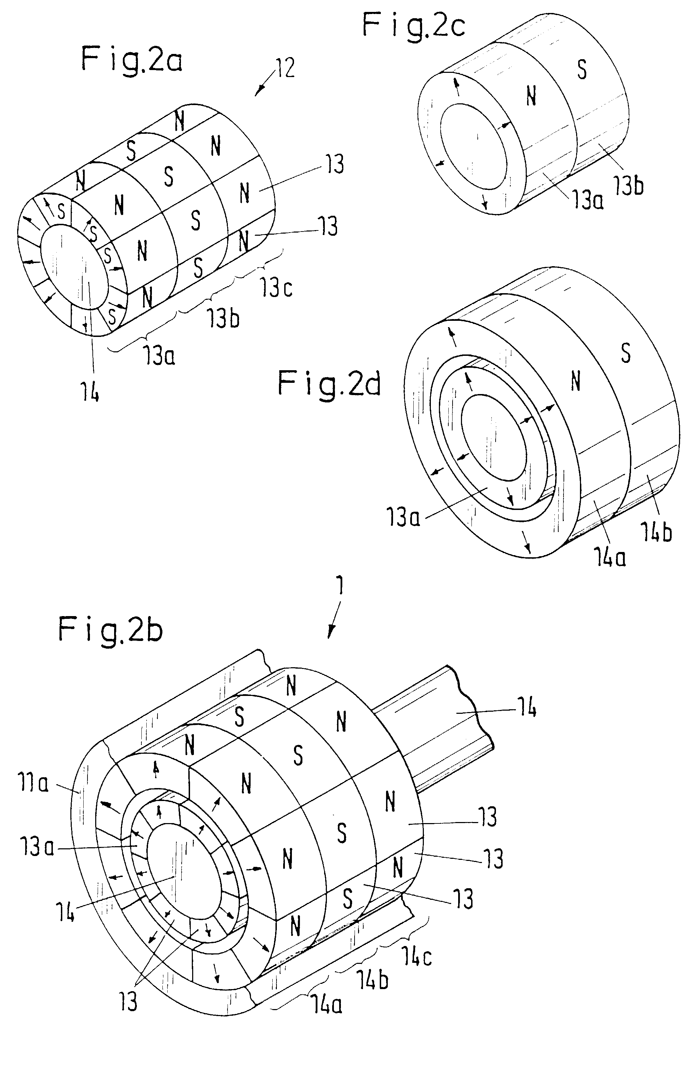

Fig. 2a zeigt den in Fig. 1 dargestellten rotierbaren Körper 12 in einer perspektivischen Ansicht. An der zylinderförmigen Aussenfläche des Innenkörpers 14 sind kreisringsegmentförmige Einzelmagnetelemente 13 befestigt, die derart angeordnet sind, dass sich drei Magnetringe 13a, 13b, 13c bilden. Jeder Magentring 13a, 13b, 13c weist radialmagnetisierte Magnete 13 auf, die derart angeordnet sind, dass jeder Magnetring 13a, 13b, 13c eine monopolare Oberfläche aufweist, entweder ein magnetischer Südpol S oder ein magnetischer Nordpol N. Der Magnetring 13a weist auf der Innenfläche einen Südpol S und auf dessen Aussenfläche einen Nordpol N auf. Die Magnetringe 13a, 13b, 13c sind in axialer Richtung nebeneinander liegend angeordnet, derart, dass die Oberfläche des Körpers 12 in axialer Richtung abwechselnd die Polariät ändert.

Fig. 2b zeigt eine magnetische Abhebevorrichtung 1 in einer Ruhelage. An der Innenfläche des ortsfesten, zylinderförmigen Gehäuseteiles 11a sind kreisringsegmentförmige Einzelmagnetelemente 13 angeordnet, derart, dass sich drei Magnetringe 14a, 14b, 14c ergeben, die in radialer Richtung magnetisiert sind, und die einen Hohlzylinder zur Aufnahme des rotierbaren Körpers 12 bilden.

Fig. 2c zeigt zwei hohlzylinderförmige Einzelmagnete 13a, 13b, welche in radialer Richtung magnetisiert sind, wobei die Einzelmagnete 13a, 13b in axialer Richtung nebeneinanderliegend angeordnet sind und eine entgegengesetzte Polarisierung aufweisen. Fig. 2d zeigt eine weitere Anordnung von ringförmigen Einzelmangenten 13a, 14a, 14b, die sich für eine Anordnung gemäss Fig. 2b eignen.

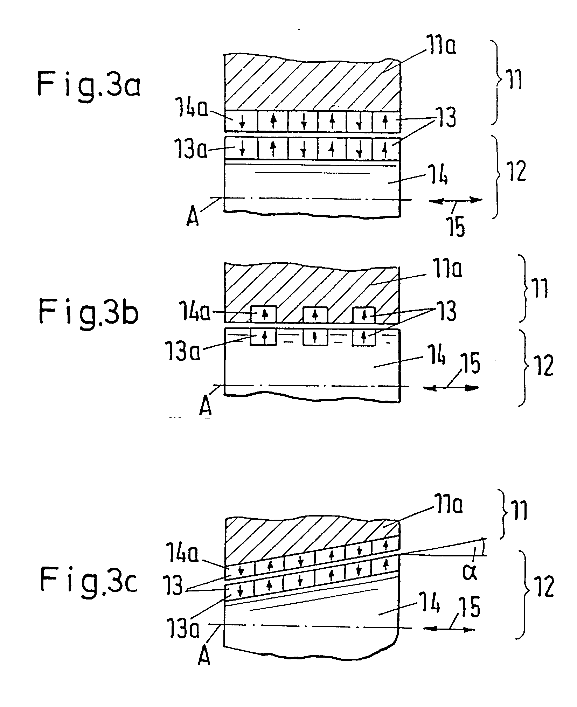

Fig. 3a zeigt einen Längschnitt durch die Anordnung gemäss Fig. 2b in einer Ruhelage. Der um die Achse A rotierbare Innenkörper 12 ist in axialer Richtung 15 beweglich. In radialer Richtung gegenüberliegende Magnetringe 13a, 14a weisen in der Ruhelage die gleiche Magnetisierungsrichtung auf. Die einzelnen, in axialer Richtung nebeneinander angeordneten Magnetringe 13a, 14a weisen eine alternierende Magnetisierungsrichtung auf. Im Ausführungsbeispiel gemäss Fig. 3b sind die Magnetringe 13a, 14a in axialer Richtung beabstandet, wobei der Zwischenraum aus einem Material mit hoher magnetischer Permeabilität, zum Beispiel aus Weicheisen besteht.

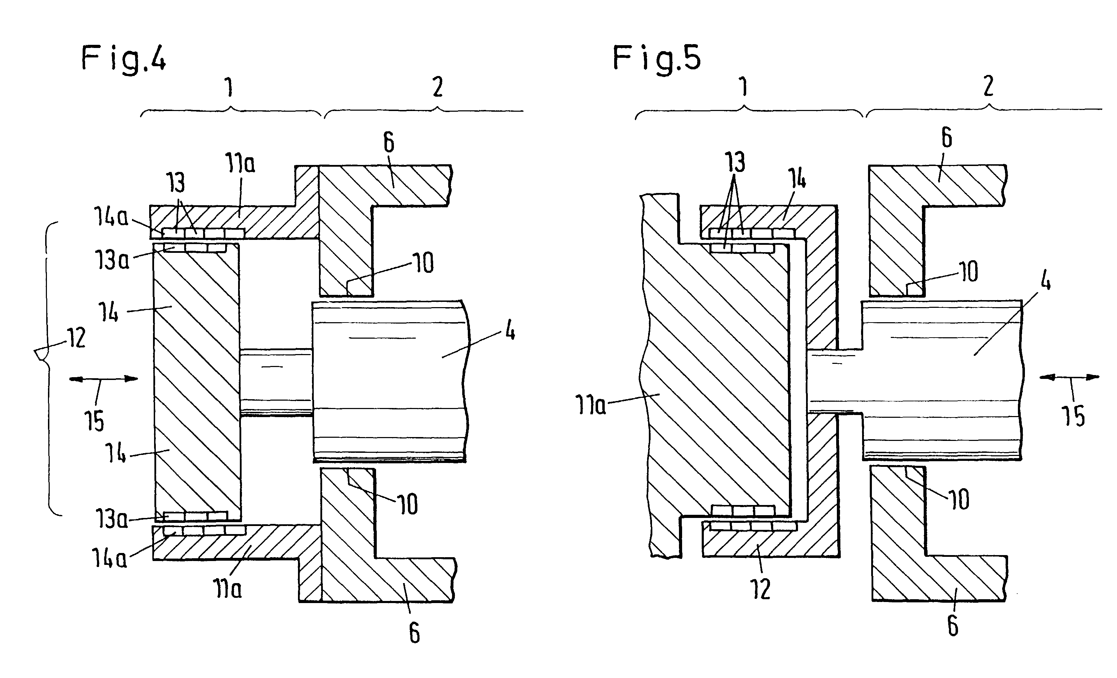

Fig. 3c zeigt ein Ausführungsbeispiel mit einem konisch ausgebildeten Körper 12, der sich in axialer Richtung um einen Winkel a weitet. Der ortfeste Körper 11 weitet sich ebenfalls konisch, sodass sich die Magnetringe 13a, 14a unter Bildung eines kleinen Luftspaltes gegenüber liegen. Fig. 4 zeigt einen Längsschnitt durch eine magnetische Abhebevorrichtung 1, die an einer Kreiselpumpe 2 befestigt ist. Die erfindungsgemässe Abhebevorrichtung 1 lässt sich an eine bestehende Kreiselpumpe 2 anbauen, indem der Gehäuseteil 11a ortsfest angeordnet wird, zum Beispiel indem er mit dem Gehäuse 6 verbunden wird. Der bewegliche, zylinderförmige Körper 12 wird über den Innenkörper 14 mit der Rotorwelle 4 verbunden, wobei der Innenkörper 14 von der Rotorwelle 4 gehalten ist, welche an mehreren Stellen, so auch am Lager 10, gelagert ist. Der Körper 12 ist in axialer Richtung 15 beweglich. Im dargestellten Ausführungsbeispiel sind am Gehäuseteil 11a vier Magnetringe 14a, und am Innenkörper drei Magnetringe 13a angeordnet. Die Welle 4 sowie der Körper 12 befinden sich bezüglich der axialen Lage in einer Ruhelage.

Fig. 5 zeigt ein weiteres Ausführungsbeispiel einer magnetischen Abhebevorrichtung 1, die mit der Rotorwelle 4 einer Kreiselpumpe 2 verbunden ist. Der ortsfest angeordnete Körper 11a ist dabei teilweise zylinderförmig ausgebildet, und der bewegliche Körper 12 teilweise hohlzylinderförmig, derart, dass der Körper 11a in radialer Richtung innenliegend, und der bewegliche Körper 12 in radialer Richtung aussenliegend angeordnet ist.

Die Abhebevorrichtung zur Erzeugung eines Axialschubes eignet sich, oder lässt sich anordnen an Kreiselpumpen mit horizontal oder vertikal verlaufender Rotorwelle.

## Patentansprüche

1. Kreiselpumpe mit einer durch ihr Fördermedium betriebenen hydraulischen Entlastungsvorrichtung (2a), bei welcher ein radial durchflossener Spalt ε, zwischen einer auf einem Rotor mit Rotorwelle (4) mitdrehenden Entlastungsscheibe (8) und einer ortsfest im Pumpengehäuse (5, 6) verankerten Entlastungsgegenscheibe (7) im Betrieb über einen Ausgleich der am Rotor wirksamen Axialkräfte aufrechterhalten wird, wobei zusätzlich eine mit Permanentmagneten (13a, 14a) bestückte Abhebevorrichtung (1), welche mit einem ersten Körper (12) mit dem Rotor verbunden ist und welche einen zweiten ortsfest angeordneten Körper (11) besitzt, am Rotor (4) Axialkräfte erzeugt, dadurch gekennzeichnet, dass die Abhebevorrichtung (1) ausserhalb des fluidbenetzten Gehäuses (5) angebracht ist, und dass die Permanentmagnete (13a) des mitrotierenden Körpers (12) und die Permanentmagnete (14a) des ortsfesten Körpers (11) ringförmig ausgebildet sind, derart, dass diese bei Stillstand der Pumpe die Rotorwelle (4) in einer Ruhelage halten, die einer axialen Spaltweite S1 des Spaltes ε entspricht, wobei sie in radialer Richtung übereinander liegen und in radialer Richtung gleichgerichtet magnetisiert sind, während im Betrieb der Pumpe eine Schubkraft F_{schub} den Rotor um einen Betrag S3 gegen eine Rückstellkraft von Entlastungsvorrichtung und Abhebevorrichtung axial verschiebt und so die axiale Spaltweite S1 um den Betrag S3 auf eine Spaltweite S2 verkleinert.

2. Kreiselpumpe nach Anspruch 1, dadurch gekennzeichnet, dass die Abhebevorrichtung (1) einen ersten Körper (12) aufweist, der mit der Rotorwelle (4) verbindbar ist.

3. Kreiselpumpe nach Anspruch 1 oder 2, dadurch gekennzeichnet, dass der erste Körper (12) rotationssymmetrisch ausgebildet ist und eine zentrale Achse (A) aufweist, und dass der erste Körper (12) bezüglich der zentralen Achse (A) aussenliegend, und der ortsfest angeordnete Körper (11) innenliegend angeordnet ist.

4. Kreiselpumpe nach Anspruch 1 oder 2, dadurch gekennzeichnet, dass der erste Körper (12) rotationssymmetrisch ausgebildet ist und eine zentrale Achse (A) aufweist, und dass der erste Körper (12) bezüglich der zentralen Achse (A) innenliegend, und der ortsfest angeordnete Körper (11) aussenliegend angeordnet ist.

5. Kreiselpumpe nach einem der Ansprüche 1 bis 4, dadurch gekennzeichnet, dass eine Mehrzahl von Permanentmagnetringen (13a, 14a) in Richtung der Achse (A) nebeneinanderliegend angeordnet sind, und dass nebeneinanderliegende Permanentmagnetringe (13a, 14a) entgegengesetzt magnetisiert sind.

6. Kreiselpumpe nach Anspruch 5, dadurch gekennzeichnet, dass eine Mehrzahl von Permanentmagnetringen (13a, 14a) in Richtung der Achse (A) angeordnet sind, wobei zwischen zwei Permanentmagnetringen (13a, 14a) ein Material mit hoher magnetischer Permeabilität angeordnet ist.

7. Kreiselpumpe nach einem der Ansprüche 1 bis 6, dadurch gekennzeichnet, dass die beiden Körper (11, 12) gegenüberliegenden Flächen aufweisen, die zylinderförmig ausgebildet sind.

8. Kreiselpumpe nach einem der Ansprüche 1 bis 6, dadurch gekennzeichnet, dass die beiden Körper (11, 12) gegenüberliegende Flächen aufweisen, die konisch ausgebildet sind.

9. Kreiselumpe nach einem der Ansprüche 1 bis 7, dadurch gekennzeichnet, dass ein Permanentmagnetring (13a, 14a) mehrere radial magnetisierte Kreissegmente bildende Magnete (13) aufweist, die derart angeordnet sind, dass jeder Magnetring auf der zylindrischen Aussenfläche und auf der zylindrischen Innenfläche jeweils eine gleiche Polarität aufweist.

10. Kreiselpumpe nach einem der Ansprüche 1 bis 9, dadurch gekennzeichnet, dass der erste Körper (12) in axialer Richtung aus der Ruhelage um einen Betrag verschiebbar ist, der kleiner oder gleich der Breite eines Permanentmagnetrings ist.

## Claims

1. Rotary pump comprising a hydraulic relief valve (2a) operated by its pump medium in which a gap ε between a relief disc (8) co-rotating on a rotor with rotor shaft (4) and a relief disc (7) of fixed position anchored in the pump housing (5, 6), and through which flow takes place radially, is maintained in operation via a compensation of the axial forces acting on the rotor, wherein a lifting device (1) equipped with permanent magnets (13a, 14a), which is connected by a first body (12) to the rotor and which has a second body (11) of fixed location exerts axial forces on the rotor 4, characterized in that the lifting device is mounted outside of the fluid wetted housing (5), and in that the permanent magnets (13a) of the co-rotating body (12) and the permanent magnets (14a) of the body (11) of fixed location are ring-shaped in such a way that these hold the rotor shaft (4) in a rest position when the pump is stationary, which corresponds to an axial gap width S1 of the gap ε, wherein they lie above one another in the radial direction and have the same direction of magnetisation in the radial direction, whereas, in the operation of the pump, a thrust force F_{schub} displaces the rotor axially by an amount S3 against a resetting force from the relief device and the lifting device and thus reduces the axial gap width S1 by the amount S3 to a gap width S2.

2. Rotary pump in accordance with claim 1, characterized in that the lifting device (1) has a first body (12) which can be connected to the rotor shaft (4).

3. Rotary pump in accordance with claim 1 or 2, characterized in that the first body (12) is rotationally symmetrical and has a central axis (A), and in that the first body (12) is arranged outwardly with respect to the central axis (A), and the body (11) of fixed position is arranged inwardly.

4. Rotary pump in accordance with claim 1 or 2, characterized in that the first body (12) is rotationally symmetrical and has a central axis (A), and in that the first body (12) is arranged inwardly with respect to the central axis (A), and the body (11) of fixed position is arranged outwardly.

5. Rotary pump in accordance with one of the claims 1 to 4, characterized in that a plurality of permanent magnet rings (13a, 14a) are arranged alongside one another in the direction of the axis (A), and in that permanent magnet rings (13a, 14a) which lie alongside one another are oppositely magnetised.

6. Rotary pump in accordance with claim 5, characterized in that a plurality of permanent magnet rings (13a, 14a) are arranged in the direction of the axis (A), with a material with high magnetic permeability being arranged between two permanent magnet rings (13a, 14a).

7. Rotary pump in accordance with one of the claims 1 to 6, characterized in that the two bodies (11, 12) have opposing surfaces which are cylindrical.

8. Rotary pump in accordance with one of the claims 1 to 6, characterized in that the two bodies (11, 12) have opposing surfaces which are conical.

9. Rotary pump in accordance with one of the claims 1 to 7, characterized in that a permanent magnetic ring (13a, 14a) has a plurality of magnets (13) forming radially magnetised circular segments, which are arranged in such a way that each magnet ring on the cylinder outer surface and on the cylindrical inner surface respectively have a common polarity.

10. Rotary pump in accordance with one of the claims 1 to 9, characterized in that the first body (12) is displaceable in the axial direction out of the rest position by an amount which is smaller or the same as the width of a permanent magnet ring.

## Revendications

1. Pompe centrifuge avec un dispositif d'équilibrage hydraulique (2a) actionné par son fluide de transport, où une fente traversée radialement ε, entre un disque d'équilibrage (8) tournant sur un rotor avec l'arbre de rotor (8) et un contre-disque d'équilibrage fixe (7) ancré dans la volute de pompe (5, 6) est maintenue en cours de fonctionnement par une égalisation des forces axiales agissant au rotor, où de plus un dispositif de levage (1) pourvu d'aimants permanents (13a, 14a). qui est relié à un premier corps (12) avec le rotor et qui possède un deuxième corps fixe (11), produit au rotor (4) des forces axiales, caractérisée en ce que le dispositif de levage (1) est installé à l'extérieur du boîtier (5) mouillé par le fluide, et en ce que les aimants permanents (13a) du corps tournant conjointement (12) et les aimants permanents (14a) du corps fixe (11) sont réalisés en une forme annulaire de telle sorte que ceux-ci, à l'arrêt de la pompe, maintiennent l'arbre de rotor (4) dans une position de repos qui correspond à une largeur de fente axiale S1 de la fente ε, où ils se situent les uns au-dessus des autres dans la direction radiale et sont aimantés dans le même sens dans la direction radiale, tandis que lors du fonctionnement de la pompe, une force de poussée F_{poussée} déplace axialement le rotor d'une valeur S3 contre une force de rappel du dispositif d'équilibrage et du dispositif de levage et diminue ainsi la largeur de fente axiale S1 de la valeur S3 à une largeur de fente S2.

2. Pompe centrifuge selon la revendication 1, caractérisé en ce que le dispositif de levage (1) présente un premier corps (12) qui peut être relié à l'arbre de rotor (4).

3. Pompe centrifuge selon la revendication 1 ou 2, caractérisée en ce que le premier corps (12) est réalisé avec une symétrie de rotation et présente un axe central (A), et en ce que le premier corps (12) est disposé relativement à l'axe central (A) à l'extérieur, et le corps fixe (11) à l'intérieur.

4. Pompe centrifuge selon la revendication 1 ou 2, caractérisée en ce que le premier corps (12) est réalisé d'une manière symétrique en rotation et présente un axe central (A), et en ce que le premier corps (12) est disposé relativement à l'axe central (A) à l'intérieur, et le corps fixe (11) à l'extérieur.

5. Pompe centrifuge selon l'une des revendications 1 à 4, caractérisée en ce que plusieurs anneaux d'aimant permanent (13a, 14a) sont disposés dans la direction de l'axe (A) les uns à côté des autres, et en ce que des anneaux d'aimants permanents (13a, 14a) disposés les uns à côté des autres sont aimantés d'une manière opposée.

6. Pompe centrifuge selon la revendication 5, caractérisée en ce que plusieurs anneaux d'aimants permanents (13a, 14a) sont disposés en direction de l'axe (A), où est disposé entre deux anneaux d'aimants permanents (13a, 14a) un matériau d'une grande perméabilité magnétique.

7. Pompe centrifuge selon l'une des revendications 1 à 6, caractérisée en ce que les deux corps (11, 12) présentent des faces opposées qui sont réalisées en une forme cylindrique.

8. Pompe centrifuge selon l'une des revendications 1 à 6, caractérisée en ce que les deux corps (11, 12) présentent des faces opposées qui sont réalisées d'une manière conique.

9. Pompe centrifuge selon l'une des revendications 1 à 7, caractérisée en ce qu'un anneau d'aimant permanent (13a. 14a) présente plusieurs aimants (13) formant des segments de cercle pouvant être aimantés radialement qui sont disposés de telle manière que chaque anneau aimanté présente sur la face extérieure cylindrique et sur la face intérieure cylindrique respectivement la même polarité.

10. Pompe centrifuge selon l'une des revendications 1 à 9, caractérisée en ce que le premier corps (12) est déplaçable dans la direction axiale à partir de la position de repos d'une valeur qui est plus petite ou égale à la largeur d'un anneau d'aimant permanent.
